# EUROPEAN PATENT APPLICATION

(11) **EP 4 321 694 A1**
(43) Date of publication of application: **14.02.2024**
(21) Application number: 22784687.0
(22) Date of filing: 06.04.2022
(51) Int. Cl.: E02F 9/26, G05B 23/02, G01M 99/00

(54) **PERFORMANCE DIAGNOSTIC DEVICE AND PERFORMANCE DIAGNOSTIC METHOD**

(30) Priority: 06.04.2021 JP 2021064894
(71) Applicant: Hitachi Construction Machinery Co., Ltd., Tokyo 110-0015 (JP)
(72) Inventor: LE Tien Trien, Tokyo 100-8280 (JP); KUNIOKA Shogo, Tokyo 110-0015 (JP); TSUKUI Hiroshi, Tokyo 110-0015 (JP); ITO Hiroki, Tokyo 100-8280 (JP)
(74) Representative: MERH-IP Matias Erny Reichl Hoffmann Patentanwälte PartG mbB
(86) International application number: PCT/JP2022/017164
(87) International publication number: WO 2022/215705

(57) **Abstract**

The purpose of the present invention is to provide a performance diagnostic device capable of diagnosing deterioration in performance of a work machine while taking into account the effects of the amount of load and the characteristics of the site where the work machine operates. A performance diagnostic device according to the present invention uses a reference performance model generated for each combination of the type of operation , performed by a work machine, the amount of load, operation details, and site characteristics to diagnose the deterioration in performance of the work machine (see fig. 1).

## Description

### Technical Field

The present disclosure relates to a performance measuring and diagnosing device that diagnoses performance of work machine.

### Background Art

It is commonly known, as a method for diagnosing performance degradation of work machine due to such as aging deterioration, to perform a predefined operation after setting the target machine into a predetermined state according to a procedure manual, and then to compare a measured operational duration with a reference value, thereby diagnosing whether the performance of the target machine is degraded. However, this method compares a predefined threshold with an operational duration, and thus this method does not consider past operational history of the work machine.

On the other hand, Patent Literature 1 discloses a method for utilizing running data when defect occurrs stored in vehicles such as normal cars running in the city on daily basis, thereby creating data during normal car operation. This method sequentially stores and saves time series data acquirable from many vehicles, and then creates numerical vectors. Then this method performs clustering process on the numerical vectors to categorize the numerical vectors into a plurality of clusters depending on features. This method then calculates a range of frequently appearing values for each value of operational parameters in each of the clusters. The range of frequently appearing value is saved as a normal value range of operational parameters. The normal value range is used as a reference value for diagnosing failures.

The threshold for determining the range of frequently appearing value is previously configured depending on such as type of the machine, and then is stored within the diagnosing device. In other words, it is difficult for the technique described in Patent Literature 1 to diagnose performance considering individual difference of machine.

In the light of the problem above, the technique in Patent Literature 2 detects state data of vehicle such as cars running under a previously configured predetermined road condition; after storing the state data for a predetermined period or for a predetermined distance, normal state model of state data is created for a predetermined road condition from the car state data. After creating the normal state model, when running under a previously configured predetermined road condition, the normal state model is compared with acquired car state data, thereby it is possible to detect failures when running.

### Citation List

### Patent Literature

Patent Literature 1 : JP Patent 4414470 B
Patent Literature 2 : JP Patent 5018444 B

### Summary of Invention

### Technical Problem

Work machine typically works under various environments or at various sites, and also works at various amounts of load even at a same site. The techniques described in Patent Literatures 1-2 can consider individual differences of machine. However, those literatures do not consider influences from onsite characteristics or amount of load.

The present disclosure is made in the light of situations above. It is an objective of the present disclosure to provide a performance diagnosing device that can diagnose performance degradation considering influence of onsite characteristics on which work machine works or of amount of load.

### Solution to Problem

A performance diagnosing device according to the present disclosure diagnoses performance degradation of a work machine using a reference performance model that is created for each of combinations of an operational type performed by the work machine, an amount of load, a detail of operation, and an onsite characteristic.

### Advantageous Effects of Invention

According to the performance diagnosing device of the present disclosure, it is possible to precisely diagnose performance degradation of work machine working at various sites or working under various amounts of load.

### Brief Description of Drawings

Figure 1 is a configuration diagram of a performance diagnosing device 1 according to an embodiment 1.
Figure 2A is a flowchart explaining a procedure for the performance diagnosing device 1 to diagnose performance of a work machine 100.
Figure 2B is a flowchart explaining a procedure for the performance diagnosing device 1 to diagnose performance of the work machine 100.
Figure 3 is a configuration diagram of the performance diagnosing device 1 according to an embodiment 2.
Figure 4 is a configuration diagram of the performance diagnosing device 1 according to an embodiment 3.
Figure 5 is a configuration diagram of the performance diagnosing device 1 according to an embodiment 4.
Figure 6 is a configuration diagram of the performance diagnosing device 1 according to an embodiment 5.

### Description of Embodiments

### <Embodiment 1>

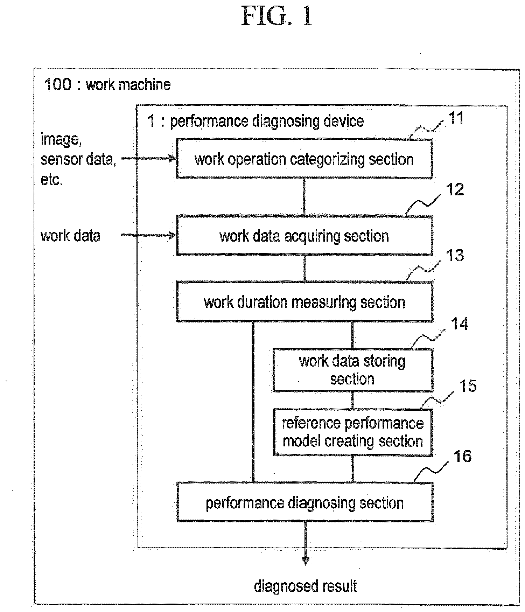

Figure 1 is a configuration diagram of a performance diagnosing device 1 according to an embodiment 1 of the present disclosure. The performance diagnosing device 1 is a device for diagnosing performance degradation of a work machine 100 according to such as load information of the work machine, operation information of the work machine 100, or onsite characteristics of the work machine 100. The embodiment 1 assumes that the performance diagnosing device 1 is installed within the work machine 100.

The performance diagnosing device 1 includes a work operation categorizing section 11, a work data acquiring section 12, a work duration measuring section 13, a work data storing section 14, a reference performance model creating section 15, and a performance diagnosing section 16.

The work operation categorizing section 11 identifies and categorizes operations of work machine. For example, it is possible to identify and categorize operations by recognizing operations of excavator such as digging or dumping using image processing from videos of onboard cameras installed on the excavator. Alternatively, sensor data from a controller of the work machine 100 may be acquired that describes a detection result of physical state of the work machine 100 detected by a sensor included in the work machine 100. The sensor data may be used to identify the operation performed by the work machine 100. The sensor data may be acquired in the form of CAN (Control Area Network) data flowing through a network within the work machine 100, for example. The work operation categorizing section 11 identifies a type of the operation by a categorizing process.

The work data acquiring section 12 is electrically connected to the work operation categorizing section 11. The work data acquiring section 12 acquires, depending on the operation identified by the work operation categorizing section 11, work data that is necessary for measuring duration of the operation. The work data acquiring section 12 outputs the work data to the work duration measuring section 13. The work data acquiring section 12 can backwardly acquire past work data representing load information of the work machine 100, details of operation of the work machine 100, etc. For example, work data relating to an assumed operation is acquired in time series and is saved, thereby it is possible to acquire work data at any past time.

Amount of load of the work machine 100 may include such as below. For example, a pressure value of hydraulic equipment that activates a moving portion by hydraulic pressure represents a load applied to the moving portion. Thus such hydraulic pressure may be used as an indicator of the load amount. Any other parameter representing work load of the work machine 100 may be used as an indicator of amount of load.

Physical characteristic of a site where the work machine 100 operates may include such as below. For example, a three dimensional shape of a place where the work machine 100 works represents physical characteristic of the working site. Alternatively, in a case of the work machine 100 performing digging operation, soil property or hardness of ground, and type of environment (such as scrapping site, disassembling site) where the work machine works influence on work efficiency. Therefore, soil property and working environment information are used as physical characteristics. Any other parameters influencing on work efficiency of the work machine 100 may be used as physical characteristic of the site. A method for acquiring onsite characteristic will be described later.

The work duration measuring section 13 identifies, from the work data acquired from the work data acquiring section 12, a start timing and an end timing of the operation categorized by the work operation categorizing section 11, thereby measuring operational duration. In a case of excavator, a start timing and an end timing of digging operation is identified by image processing from an image acquired by capturing the operation, thereby measuring a duration of the digging operation. The work duration measuring section 13 is electrically connected to the work data storing section 14. The work duration measuring section 13 outputs the measured duration to the work data storing section 14.

The work data storing section 14 stores, as time series data, the work data acquired from the work data acquiring section 12 and the work duration measured by the work duration measuring section 13, for each of combinations of operation type / amount of load / detail of operation / site characteristic categorized by the work operation categorizing section 11, for a predetermined period or for a predetermined operating time.

The reference performance model creating section 15 creates a reference performance model from the data stored in the work data storing section 14. The created reference performance model is saved into a same storage device as that of the work data, for each of combinations of operation type / amount of load / detail of operation / site characteristic categorized by the work operation categorizing section 11.

The performance diagnosing section 16 compares work data of the operation categorized by the work operation categorizing section 11 with a reference performance model under a same operational condition (operation category / amount of load / detail of operation / site characteristic) stored in the work data storing section 14, thereby diagnosing whether a current performance of the work machine 100 is degraded below a reference value. The diagnosed result may be outputted as an alarm of the work machine 100, or may be notified to related parties via network.

The performance diagnosing section 16 further performs regression analysis on work data for a predetermined past period stored in the work data storing section 14, and compares the analyzed result with the reference performance model. Accordingly, it is possible to predict whether the performance of the work machine 100 may be degraded below a reference value after a predetermined period has passed from now.

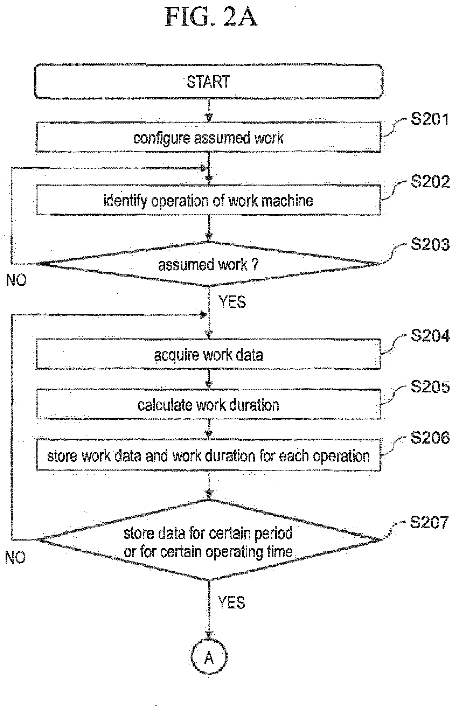

Figures 2A-2B are flowcharts explaining a procedure for the performance diagnosing device 1 to diagnose performance of the work machine 100. For the sake of convenience of description, one flowchart is divided into two figures, and each figure is connected at "A" in the figure. Hereinafter, each step in Figures 2A-2B will be described.

### (Figure 2A : step S201)

The work operation categorizing section 11 selects an operation type (diagnosed target operation) of the work machine 100 which will be diagnosed from this step. In addition to operation type, the work operation categorizing section 11 also configures a basic operational detail (for example, in a case of moving operation, the work machine 100 goes straight) assumed in the operation. The work operation categorizing section 11 stores the selected operation type and the operational detail as an assumed work.

### (Figure 2A : step S202)

The work operation categorizing section 11 identifies the operation of the work machine 100 by such as pattern matching using image recognition from camera image or using CAN data, thereby identifying the operation type. Examples of operation type may include rotating operation, arm pushing operation, digging operation, or moving operation.

### (Figure.2A : step S203)

The work operation categorizing section 11 checks whether the operation identified in S202 is assumed as a diagnosed target operation in S201 (i.e. whether the work is assumed). If the identified operation is a diagnosed target operation, the flowchart proceeds to S204 (S203 : YES). Otherwise the flowchart returns to S202 (S203 : NO).

### (Figure 2A : step S204)

The work data acquiring section 12 acquires work data of the operation configured in S201 from the machine via CAN communication, for example. In this step, the work data may be always acquired in real time and be saved, and then recent work data may be acquired backwardly from the time at which the operation finishes, for a sufficiently longer time than the expected duration of the operation.

### (Figure 2A : step S204: additional note No. 1)

The work data acquired in this step may include such as data representing amount of load of the operation, data representing details of the operation, etc. Examples of load amount may include a discharging pressure of hydraulic pump driving the work machine, for example. Examples of details of operation may include a rotational speed of wheel in a case of moving operation of work machine. The work data acquiring section 12 further receives an operation type identified by the work operation categorizing section 11. The data describing this operation type may be handled as a part of work data.

### (Figure 2A : step S204: additional note No. 2)

In this step, a parameter may also be acquired that represents physical characteristic of environment where the work machine is placed for performing the operation. For example, a shape of place or road state where the work machine is placed may be acquired from an image acquired by capturing surroundings of the work machine. Alternatively, when performing digging operation, road hardness may be acquired from a driving force (e.g. hydraulic pressure) that is necessary for driving the packet. Alternatively, data describing these parameters may be acquired via appropriate interface. This physical characteristic data may be handled as a part of the work data.

### (Figure 2A : step 205)

The work duration measuring section 13 detects a start timing and an end timing of the operation from the inputted work data, thereby calculating a work duration (a duration from when the operation starts to when the operation finishes).

### (Figure 2A : step S206)

The work data storing section 14 stores the work data acquired in S204 and the work duration calculated in S205 into the database for each of identified operations.

### (Figure 2A : step S207)

The performance diagnosing device 1 checks whether the data has been stored for a certain period or for a certain operating time. If the data is not still stored (S207 : NO), the flowchart returns to S204. If the data has already been stored (S207 : YES), the flowchart proceeds to S208.

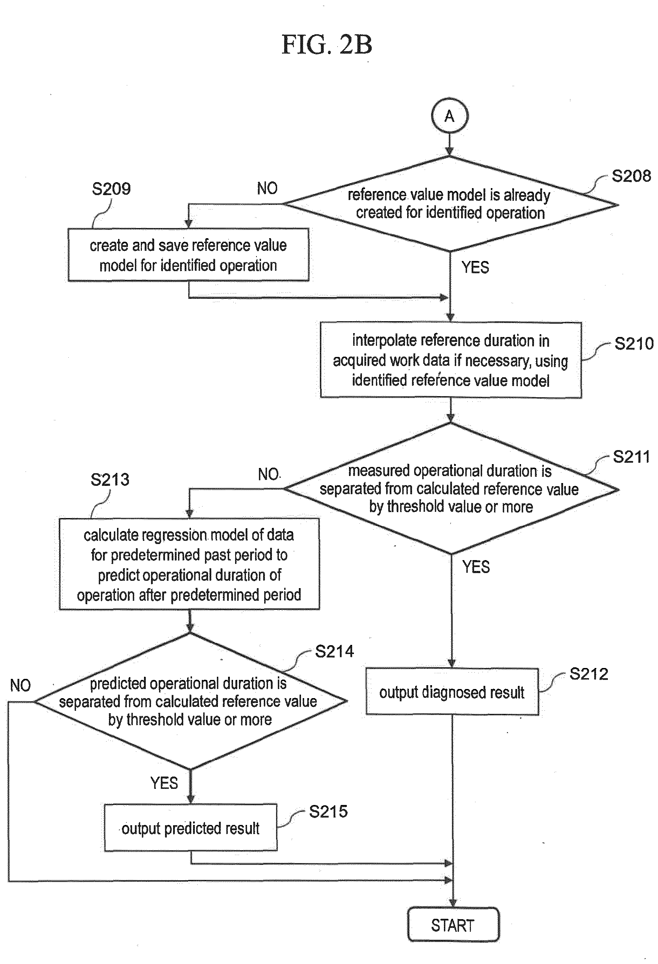

### (Figure 2B : steps S208-S210)

The reference performance model creating section 15 checks whether a reference performance model is already created for the operation identified in S202 (S208). If not created yet (S208 : NO), the reference performance model creating section 15 creates a reference performance model for the identified operation, and stores the created model into the database (S209). If already created (S208 : YES), the performance diagnosing section 16 interpolates the reference duration in the acquired work data if necessary, using the reference performance model of the identified operation (S210).

### (Figure 2B : step S209 : additional note)

The reference performance model creating section 15 creates the reference performance model for each of combinations of: (a) type of operation of work machine; (b) amount of load of operation of work machine ; (c) detail of operation of work machine ; (d) physical characteristic parameter of environment where work machine is placed.

### (Figure 2B : step S210 : additional note)

The reference performance model may describe the reference performance discretely in some cases. In such cases, the intermediate values between each of discrete values should be supplemented by such as linear interpolation. This step is for performing such interpolation.

### (Figure 2B : steps S211-S213)

The performance diagnosing section 16 checks whether the operational duration measured in S205 is separated from the reference value calculated in S210 by a threshold value or more (S211). If the operational duration is separated from the reference value by the threshold value or more (S211 : YES), the performance diagnosing section 16 outputs a diagnosed result for the amount of performance degradation of the work machine 100 corresponding to the separated amount (step S212). Otherwise (S211 : NO) the performance diagnosing section 16 calculates a regression model between the identified operation and data for a predetermined past period in the work data. The performance diagnosing section 16 predicts an operational duration of the operation after a predetermined period using the regression model (S213).

### (Figure 2B : step S212 : additional note)

The performance diagnosing section 16 diagnoses that the performance degradation is larger as the difference between the measured operational duration and the reference performance is larger. The performance diagnosed result may be represented by the difference itself or may be represented by parameters calculated by performing some computation onto the difference. It also applies to S215.

### (Figure 2B : steps S214-S215)

The performance diagnosing section 16 checks whether the predicted operational duration after the predetermined period is separated from the calculated reference value by a threshold value or more (S214). If the predicted operational duration after the predetermined period is separated from the reference value by the threshold value or more (S214 : YES), the performance diagnosing section 16 outputs a predicted diagnosed result for the amount of performance degradation of the work machine 100 corresponding to the separated amount (S215). Otherwise this flowchart is finished (S214 : NO).

### <Embodiment 1 : summary>

The performance diagnosing device 1 according to this embodiment creates a reference performance model for each of combinations of: (a) type of operation of work machine ; (b) amount of load of operation of work machine ; (c) detail of operation of work machine ; (d) physical characteristic parameter of environment where work machine is placed. The performance diagnosing device 1 compares a reference performance acquired by referring to the reference performance model with an operational duration, thereby diagnosing whether the operation is normal. Accordingly, it is possible to diagnose performance considering individual environment where the work machine is placed or considering amount of load. Therefore, it is possible to improve diagnosing accuracy better than conventional performance diagnosis.

The performance diagnosing device 1 according to this embodiment is installed within the work machine 100. In other words, the work machine 100 can diagnose its performance. Accordingly, the work machine 100 can perform self-analysis without depending on user operation.

### <Embodiment 2>

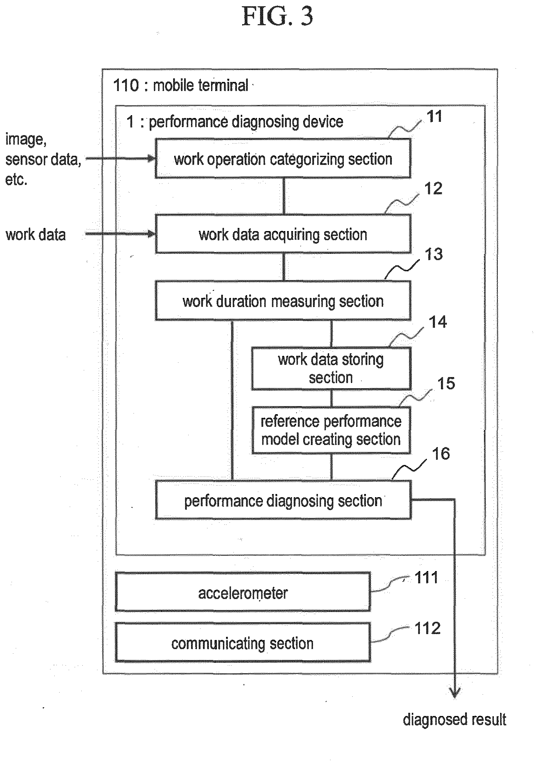

Figure 3 is a configuration diagram of the performance diagnosing device 1 according to an embodiment 2 of the present disclosure. The configuration of the performance diagnosing device 1 in this embodiment is identical to that of the embodiment 1. However, unlike the embodiment 1, the performance diagnosing device 1 in this embodiment is formed within a mobile terminal 110 (e.g. smartphone).

The mobile terminal 110 communicates with the work machine 100 via a communicating section 112, thereby it is possible to acquire CAN data (including sensor data describing detected result of sensor) flowing through a network within the work machine 100. The work operation categorizing section 11 can identify operation type of the work machine 100, or can measure duration of the operation, using the CAN data.

Alternatively, the mobile terminal 110 may be attached to the work machine 100, and an accelerometer 111 or other sensor embedded within the mobile terminal 110 may be used to measure physical operations such as vibrations along with operation of the work machine 100. Accordingly, it is possible to identify operation type of work machine 100 and to measure duration of the operation. For example, the work operation categorizing section 11 may previously store a vibration pattern caused along with operation of the work machine 100 for each of operation types. The work operation categorizing section 11 matches a vibration pattern measured by the sensor with the previously stored vibration pattern, thereby it is possible to identify operation type and operation duration.

The performance diagnosing device 1 according to this embodiment can collect data necessary for creating reference performance model, by a worker using the mobile terminal 110 periodically. In addition, by electronic mail or other alarming function included in the mobile terminal 110, it is possible to notify a worker of the diagnosed result quickly. Thus it is possible to timely take countermeasures such as repair. Further, the worker can always carry the mobile terminal 110. Thus it is possible to diagnose performance for a specific operation when necessary.

### <Embodiment 3>

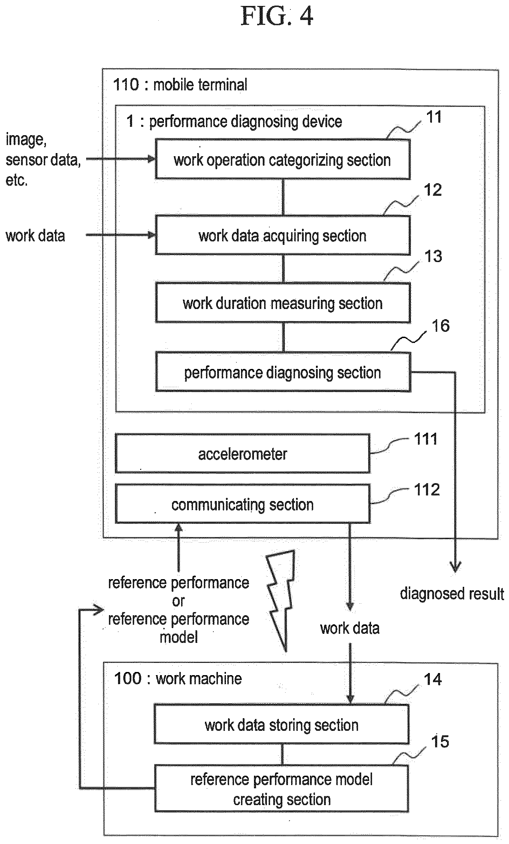

Figure 4 is a configuration diagram of the performance diagnosing device 1 according to an embodiment 3 of the present disclosure. The performance diagnosing device 1 in this embodiment is formed within the mobile terminal 110. The performance diagnosing device 1 includes the work operation categorizing section 11, the work data acquiring section 12, the work duration measuring section 13, and the performance diagnosing section 16. The work data storing section 14 and the reference performance model creating section 15 are installed within the work machine 100. Other configurations are same as those in the embodiment 1.

The communicating section 112 communicates with the work machine 100 as in the embodiment 2, thereby it is possible to acquire such as CAN data within the work machine 100. Accordingly, it is possible to identify operation or to measure operational duration as in the embodiment 2. The communicating section 112 refers to the reference performance model stored in the work machine 100 to acquire a reference performance, or alternatively acquires the reference performance model itself

The work machine 100 acquires work data (including operation type, detail of operation, environmental characteristic) via the communicating section 112, and stores the work data into the work data storing section 14. The reference performance model creating section 15 uses the work data stored in the work data storing section 14 to create a reference performance model.

The performance diagnosing device 1 according to this embodiment can achieve a same advantageous effect as in the embodiment 1. In addition, the reference performance model is created and stored within the work machine 100. Thus comparing to the case where the mobile terminal 110 creates and stores the reference performance model, it is possible to provide a same reference performance model without depending on individual mobile terminals 100. In other words, if the mobile terminal 110 creates and stores the reference performance model, the reference performance model is unique to the mobile terminal 110, which means that each of the mobile terminals 110 stores its own reference performance model. On the other hand, in this embodiment, a same reference performance model can be provided to each mobile terminal 110.

### <Embodiment 4>

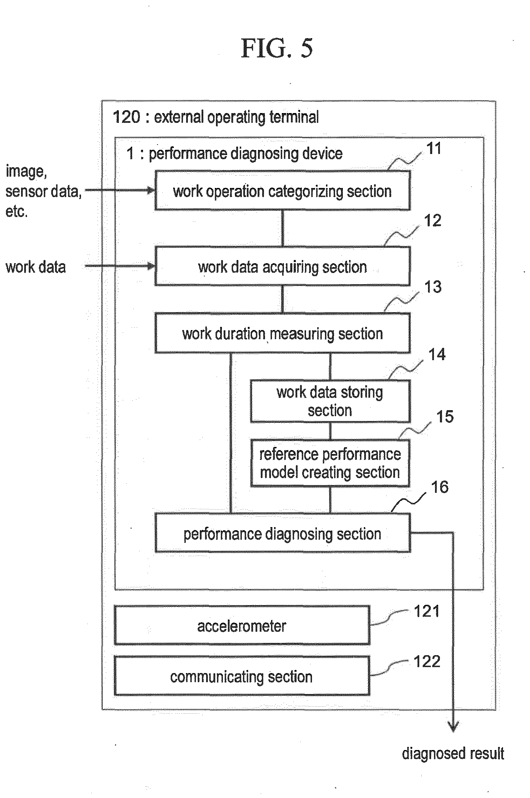

Figure 5 is a configuration diagram of the performance diagnosing device 1 according to an embodiment 4 of the present disclosure. The performance diagnosing device 1 in this embodiment is formed within an external operating terminal 120. Other configurations are same as those in the embodiment 1. The external operating terminal 120 is a terminal that can be attached to the work machine 100 subsequently. After attaching the external operating terminal 120, it is possible to control the work machine 100 via the external operating terminal 120. The external operating terminal 120 includes a sensor such as an accelerometer 121, and a communicating section 122.

The external operating terminal 120 communicates with the work machine 100 via the communicating section 122, thereby it is possible to acquire CAN data from the work machine 100 in real time. The performance diagnosing device 1 uses the CAN data to identify operation or to measure operational duration. Alternatively, the performance diagnosing device 1 matches the vibration pattern detected by the accelerometer 121 with the previously stored vibration pattern, thereby it is possible to identify operation type and operation duration.

The performance diagnosing device 1 according to this embodiment can achieve a same advantageous effect as in the embodiment 1. In addition, the performance diagnosing device 1 is formed within the external operating terminal 120, thereby it is possible to subsequently add the diagnosing functionality provided by the performance diagnosing device 1 to the existing work machine 100 that does not include performance diagnosing functionality. Accordingly, it is possible for the work machine 100 that does not include self-diagnosing functionality to equip such functionality.

### <Embodiment 5>

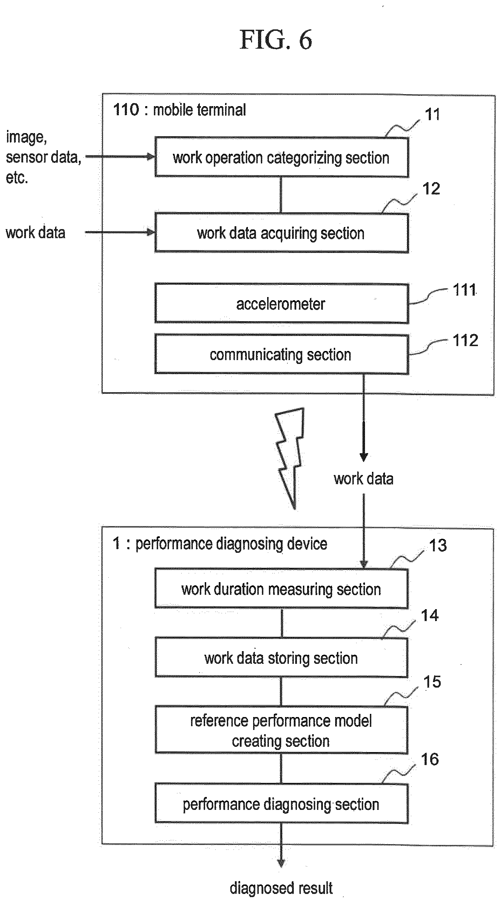

Figure 6 is a configuration diagram of the performance diagnosing device 1 according to an embodiment 5 of the present disclosure. The performance diagnosing device 1 in this embodiment is configured as a server computer placed on a network. The performance diagnosing device 1 includes the work duration measuring section 13 (also works as a communicating section for acquiring work data), the work data storing section 14, the reference performance model creating section 15, and the performance diagnosing section 16. The work operation categorizing section 11 and the work data acquiring section 12 are installed within the mobile terminal 110. Other configurations are same as those in the embodiment 1.

The mobile terminal 110 acquires work data (including operation type, detail of operation, environmental characteristic) via the accelerometer 111 or the communicating section 112 as in the embodiment 2. The mobile terminal 110 sends the work data to the performance diagnosing device 1 via the communicating section 112. The performance diagnosing device 1 receives the work data. The procedures at and after the work duration measuring section 13 is same as that of embodiment 1.

The performance diagnosing device 1 according to this embodiment can achieve a same advantageous effect as in the embodiment 1. In addition, by configuring the performance diagnosing device 1 using a server computer with high computational capability, for example, it is possible to accelerate the computation as well as to notify the diagnosed result to workers quickly.

### <modification of present disclosure>

The present disclosure is not limited to the embodiments as described above, but includes various modifications. For example, the embodiments are described in detail for readily understanding of the present disclosure which is not necessarily limited to the one equipped with all structures as described above. It is possible to replace a part of the structure of one embodiment with the structure of another embodiment. The structure of one embodiment may be provided with an additional structure of another embodiment. It is further possible to add, remove, and replace the other structure to, from and with a part of the structure of the respective embodiments.

In the embodiments above, the work data acquiring section 12 acquires work data (including operation type, detail of operation, environmental characteristic), and the work duration measuring section 13 measures the work duration. These pieces of data are used by the performance to acquire reference performances. Thus the performance diagnosing section 16 acquires all of these pieces of data at that moment. Accordingly, the performance diagnosing section 16 works as an acquiring section that acquires these pieces of data.

In the embodiments above, the work machine 100 may be configured by a microcomputer comprising a combination of a CPU (Central Processing Unit) performing computations, a ROM (Read Only Memory) storing programs for computations, and a RAM (Random Access Memory) as a temporal storage device storing such as computational process or temporal control variables. The microcomputer can acquire CAN data by executing the stored programs.

In the embodiments above, the work operation categorizing section 11, the work data acquiring section 12, the work duration measuring section 13, the work data storing section 14, the reference performance model creating section 15, and the performance diagnosing section 16 may be configured by hardware such as circuit device implementing these functionalities, or may be configured by software implementing these functionalities executed by processors.

### Reference Signs List

1 : performance diagnosing device
11 : work operation categorizing section
12 : work data acquiring section
13 : work duration measuring section 13
14 : work data storing section
15 : reference performance model creating section
16 : performance diagnosing section
100 : work machine
110 : mobile terminal
120 : external operating terminal

## Claims

1. A performance diagnosing device that diagnoses performance of a work machine, comprising:
a data acquiring section that acquires data describing a type of operation performed by the work machine, a duration from start of the operation to end of the operation, an amount of load of the operation, a detail of the operation, and a physical characteristic of a site where the work machine is placed; and
a performance diagnosing section that diagnoses performance of the work machine by referring to a reference performance model that describes a reference performance of the work machine,
wherein the reference performance model describes the reference performance for each of combinations of the type, the amount of load, the detail, and the physical characteristic,
wherein the performance diagnosing section refers to the reference performance model using the type, the amount of load, the detail, and the physical characteristic, thereby acquiring a reference performance of the operation for the type, the amount of load, the detail, and the physical characteristic, and
wherein the performance diagnosing section compares the acquired reference performance with the duration, thereby diagnosing performance of the work machine to output a result of the diagnosis.

2. The performance diagnosing device according to claim 1, further comprising an operation categorizing section that categorizes the operation,
wherein the operation categorizing section categorizes the operation using at least one of
an image acquired by capturing the operation;
acceleration data that describes a result acquired by measuring an acceleration caused at the work machine along with the operation; or
sensor data that describes a result of measuring a physical state of the work machine caused along with the operation, the physical state being acquired by a sensor detecting the physical state,
thereby identifying a type of the operation.

3. The performance diagnosing device according to claim 1, further comprising a work duration measuring section that measures the duration,
wherein the work duration measuring section identifies a start time of the operation and an end time of the operation using at least one of
an image acquired by capturing the operation;
acceleration data that describes a result acquired by measuring an acceleration caused at the work machine along with the operation; or
sensor data that describes a result of measuring a physical state of the work machine caused along with the operation, the physical state being acquired by a sensor detecting the physical state,
thereby measuring the duration.

4. The performance diagnosing device according to claim 1, further comprising:
a data storing section that stores the data; and
a model creating section that creates the reference performance model using the data stored in the data.

5. The performance diagnosing device according to claim 4,
wherein the model creating section creates the reference performance model for each of combinations of the type described in the data, the amount of load described in the data, the detail described in the data, and the physical characteristic described in the data.

6. The performance diagnosing device according to claim 1, further comprising a data storing section that stores the data,
wherein the performance diagnosing section uses a history of the data stored in the data storing section, thereby predicting the duration after a predetermined duration has passed, and
wherein the performance diagnosing section predicts whether performance degradation will occur at a time when the predetermined period has passed, according to whether a difference between the predicted duration at a time when the predetermined period has passed and the reference performance described by the reference performance model is at or above a threshold.

7. The performance diagnosing device according to claim 1,
wherein the performance diagnosing device is configured as a mobile terminal that is attachable to and detachable from the work machine,
the performance diagnosing device further comprising:
an operation categorizing section that categorizes the operation;
a work duration measuring section that measures the duration; and
an accelerometer that measures acceleration applied to the mobile terminal,
wherein the operation categorizing section categorizes the operation using acceleration measured by the accelerometer, and
wherein the work duration measuring section uses acceleration measured by the accelerometer to identify a start time of the operation and an end time of the operation, thereby measuring the duration.

8. The performance diagnosing device according to claim 1,
wherein the performance diagnosing device is configured as a mobile terminal that is attachable to and detachable from the work machine,
the performance diagnosing device further comprising:
an operation categorizing section that categorizes the operation;
a work duration measuring section that measures the duration; and
a communicating section that acquires, by communication from the work machine, sensor data that describes a result of measuring a physical state of the work machine caused along with the operation, the physical state being acquired by a sensor detecting the physical state,
wherein the operation categorizing section categorizes the operation using the sensor data acquired by the communicating section, and
wherein the work duration measuring section uses the sensor data acquired by the communicating section to identify a start time of the operation and an end time of the operation, thereby measuring the duration.

9. The performance diagnosing device according to claim 7,
wherein the work machine comprising:
a data storing section that stores the data; and
a model creating section that creates the reference performance model using the data stored in the data,
wherein the performance diagnosing section further comprising a communicating section that acquires the reference performance model from the work machine, and
wherein the performance diagnosing section uses the reference performance model acquired by the communicating section from the work machine, thereby diagnosing performance of the work machine.

10. The performance diagnosing device according to claim 1,
wherein the performance diagnosing device is configured as an external operating terminal that is attachable to and detachable from the work machine and that is used by a worker to control the work machine.

11. The performance diagnosing device according to claim 1, further comprising a communicating section that connects to a terminal that collects the data to acquire the data from the terminal,
wherein the performance diagnosing section uses the data acquired by the communicating section from the terminal, thereby diagnosing performance of the work machine.

12. The performance diagnosing device according to claim 1,
wherein the physical characteristic is a parameter that influences on work efficiency of the work machine when performing the operation.

13. The performance diagnosing device according to claim 12,
wherein the physical characteristic is defined by at least one of
a soil characteristic of the site;
a type of the site; or
a shape of the site.

14. The performance diagnosing device according to claim 1,
wherein the amount of load is defined by a discharging pressure of a hydraulic pump that drives the work machine.

15. A performance diagnosing method for diagnosing performance of a work machine, comprising:
acquiring data that describes a type of operation performed by the work machine, a duration from start of the operation to end of the operation, an amount of load of the operation, a detail of the operation, and a physical characteristic of a site where the work machine is placed; and
diagnosing performance of the work machine by referring to a reference performance model that describes a reference performance of the work machine,
wherein the reference performance model describes the reference performance for each of combinations of the type, the amount of load, the detail, and the physical characteristic,
wherein the diagnosing performance includes referring to the reference performance model using the type, the amount of load, the detail, and the physical characteristic, thereby acquiring a reference performance of the operation for the type, the amount of load, the detail, and the physical characteristic, and
wherein the diagnosing performance includes comparing the acquired reference performance with the duration, thereby diagnosing performance of the work machine to output a result of the diagnosis.
